# EUROPÄISCHE PATENTSCHRIFT

(11) **EP 4 366 154 B1**
(45) Veröffentlichungstag und Bekanntmachung des Hinweises auf die Patenterteilung: **29.04.2026**
(21) Anmeldenummer: 22205895.0
(22) Anmeldetag: 07.11.2022
(51) Int. Cl.: H02P 6/22, H02P 6/20, A01D 34/02, A01D 34/37, A01D 34/78, A01D 34/90, A01D 46/26

(54) **VERFAHREN ZUM BETREIBEN EINES PERMANENTERREGTEN SYNCHRONMOTORS EINES HANDGETRAGENEN BEARBEITUNGSGERÄTS UND HANDGETRAGENES BEARBEITUNGSGERÄT**
METHOD FOR OPERATING A PERMANENTLY EXCITED SYNCHRONOUS MOTOR OF A HAND-HELD MACHINING DEVICE AND HAND-HELD MACHINING DEVICE
PROCÉDÉ DE FONCTIONNEMENT D'UN MOTEUR SYNCHRONE À EXCITATION PERMANENTE D'UN APPAREIL D'USINAGE PORTÉ À LA MAIN ET APPAREIL D'USINAGE PORTÉ À LA MAIN

(43) Veröffentlichungstag der Anmeldung: 08.05.2024
(73) Patentinhaber: Andreas Stihl AG & Co. KG, 71336 Waiblingen (DE)
(72) Erfinder: DIETRICH, Simon, 71336 Waiblingen (DE); BRAUN, Jan Lukas, 71334 Waiblingen (DE); EBERLE, Christian, 71404 Korb (DE)
(74) Vertreter: Patentanwälte Ruff, Wilhelm, Beier, Dauster & Partner mbB

(56) Entgegenhaltungen:
- DE-A1- 102014 226 285
- US-A- 5 432 414
- US-A1- 2020 343 838

## Beschreibung

### ANWENDUNGSGEBIET UND STAND DER TECHNIK

Die Erfindung bezieht sich auf ein Verfahren zum Betreiben eines permanenterregten Synchronmotors eines handgetragenen Bearbeitungsgeräts und ein handgetragenes Bearbeitungsgerät.

Die DE 10 2014 226 285 A1 offenbart ein Ausführungsbeispiel einer Betriebsschaltung zum Betreiben eines Motors, wobei die Betriebsschaltung eine Drehzustandserzeugungsschaltung, die mit einer Zustandssteuerung verbunden ist, beinhaltet. Die Zustandssteuerung ist mit einer Pulsbreitenmodulationserfassungsschaltung, einem Zeitgeber und einer Betriebszeitsteuersteuerung verbunden. Entsprechend einem weiteren Ausführungsbeispiel beinhaltet ein Verfahren zum Betreiben des Motors ein Koppeln eines einzelnen Hall-Sensors mit dem Motor und ein Verwenden des einzelnen Hall-Sensors zum Bestimmen einer Position eines Rotors des Motors. Die Betriebsschaltung zieht den Rotor derart, dass einer von dessen Nordpol oder Südpol benachbart zu dem einzelnen Hall-Sensor ist. Nachdem der Pol des Rotors benachbart zu dem Rotor ist, startet der Motor.

Die US 2020/0343838 A1 offenbart ein Elektrowerkzeug, das einen bürstenlosen Motor mit einem Stator, der mehrere Phasen definiert, und einem Rotor umfasst. Es ist eine Leistungseinheit mit Leistungsschaltern vorhanden, mit denen der Motor mit Leistung versorgt werden kann. Ein Primärcontroller ist mit der Leistungseinheit verbunden, um Antriebssignale auszugeben, die die Phasen des Motors über eine Reihe von Sektoren der Rotorrotation antreiben. Der Primärregler misst eine Gegen-EMK-Spannung des Motors und führt einen Übergang einer Motorkommutierung von einem aktuellen Sektor zu einem nächsten Sektor basierend auf der Gegen-EMK-Spannung durch. Ein Sekundärcontroller ist vorhanden, um mindestens eines der Antriebssignale zu empfangen, eine Geschwindigkeit und/oder eine Richtung der Rotation des Motors aus den Antriebssignalen zu berechnen und Korrekturmaßnahmen zu ergreifen, um die Leistungszufuhr zu dem Motor zu unterbrechen, wenn er eine Übergeschwindigkeitsbedingung oder eine falsche Richtung der Rotation erkennt.

Die US 5 432 414 A offenbart, wenn ein sensorloser Spindelmotor mit einem Rotor und mehreren Spulen gestartet wird, eine CPU Phasensteuerungssignale an einen Erregungsphasenschaltkreis ausgibt, um den Rotor zwangsweise zu drehen. Die CPU erkennt anhand von Rotorpositionssignalen von einer Rotorpositionserkennungsschaltung, ob der Rotor in der erzwungenen Rotation gedreht wird oder nicht. Wenn sich der Rotor nicht dreht, versucht die CPU daher, die Drehung erneut zu erzwingen. Bei jedem erneuten Versuch einer erzwungenen Drehung verringert die CPU die Drehgeschwindigkeit einer Anregungsphase jeder Spule. Die CPU kann die erzwungene Drehung auch ausführen, nachdem der Rotor auf eine beliebige Position ausgerichtet wurde. Wenn sich der Rotor in der erzwungenen Drehung nicht dreht, versucht die CPU daher, die Drehung erneut zu erzwingen. Bei jedem erneuten Versuch einer erzwungenen Drehung ändert die CPU die Anregungsstartphase.

### AUFGABE UND LÖSUNG

Der Erfindung liegt als Aufgabe die Bereitstellung eines Verfahrens zum Betreiben eines permanenterregten Synchronmotors eines handgetragenen Bearbeitungsgeräts und eines handgetragenen Bearbeitungsgeräts zugrunde, das jeweils verbesserte Eigenschaften aufweist.

Die Erfindung löst diese Aufgabe durch die Bereitstellung eines Verfahrens und eines handgetragenen Bearbeitungsgeräts beschrieben in den unabhängigen Ansprüchen. Vorteilhafte Weiterbildungen und/oder Ausgestaltungen der Erfindung sind in den abhängigen Ansprüchen beschrieben.

Das erfindungsgemäße Verfahren ist zum Betreiben eines permanenterregten Synchronmotors eines handgetragenen Bearbeitungsgeräts. Das Verfahren weist die Schritte auf: a) sensorloses Ermitteln einer Positionsgröße repräsentativ für eine Position eines Rotors des Synchronmotors in einem Stillstand, insbesondere des Rotors. b) Bestimmen einer Richtungsgröße zu einem kontinuierlichen Drehen des Rotors aus dem Stillstand heraus in einer Richtung in Abhängigkeit der ermittelten Positionsgröße derart, dass ein Betrag eines erreichbaren Drehmoments erzeugbar von dem Synchronmotor bei seinem sensorlosen Ansteuern zu dem Drehen in der Richtung größer als ein Betrag einer Losbrechmomentgrenze des Bearbeitungsgeräts ist. c) sensorloses Ansteuern des Synchronmotors in Abhängigkeit der bestimmten Richtungsgröße zu dem Drehen in der Richtung.

Dies ermöglicht, insbesondere das sensorlose Ermitteln und das sensorlose Ansteuern ermöglichen, einen einfachen und/oder, insbesondere somit, kostengünstigen Aufbau des Synchronmotors und/oder, insbesondere somit, des Bearbeitungsgeräts.

Zusätzlich oder alternativ ermöglicht dies, insbesondere das Bestimmen der Richtungsgröße, ein, insbesondere zuverlässiges, Starten bzw. Los- bzw. Andrehen des Synchronmotors, insbesondere aus jeder möglichen Position des Rotors.

Insbesondere können/kann das Verfahren, das Betreiben, das Ermitteln und/oder das Ansteuern automatisch sein.

Der Begriff "Starten" oder "Los- bzw. Andrehen" kann für den Begriff "Betreiben" synonym verwendet werden.

Der Begriff "bürstenloser Gleichstrommotor" (englisch Brushless DC Motor, abgekürzt BLDC- oder BL-Motor sowie auch electronically commutated Motor, kurz EC-Motor) oder "Permanentmagnet-Synchronmotor" kann für den Begriff "permanenterregter Synchronmotor" synonym verwendet werden. Zusätzlich oder alternativ kann der Synchronmotor dreiphasig sein und/oder einen, insbesondere dreiphasigen, Stator aufweisen. Weiter zusätzlich oder alternativ kann oder braucht der Synchronmotor nicht einen Magnetsensor, wie z.B. einen Hallsensor, aufweisen, insbesondere zu dem Ermitteln und zu dem Ansteuern. Im Übrigen wird auf die Fachliteratur verwiesen.

Das Bearbeitungsgerät kann ein Werkzeug aufweisen, wobei der Synchronmotor zum Antreiben des Werkzeugs ausgebildet sein kann. Zusätzlich oder alternativ kann das Bearbeitungsgerät elektrisch sein, insbesondere ein Akkugerät. Weiter zusätzlich oder alternativ kann das Bearbeitungsgerät ein Garten-, Forst-, Bau- oder Bodenbearbeitungsgerät sein.

Handgetragenes Bearbeitungsgerät kann bedeuten, dass das Bearbeitungsgerät eine Masse von maximal 50 kg (Kilogramm), insbesondere maximal 20 kg, insbesondere maximal 10 kg, insbesondere maximal 5 kg, und/oder minimal 0,2 kg, insbesondere minimal 0,5 kg, insbesondere minimal 1 kg, insbesondere minimal 2 kg, aufweisen kann.

Das Bearbeitungsgerät kann ein benutzerbetätigbares Bedienelement aufweisen, wobei in Abhängigkeit einer Betätigung des Bedienelements der Schritt c), insbesondere das Verfahren, ausgelöst bzw. ausgeführt werden kann.

Der Begriff "umfasst" oder "hat" kann für den Begriff "aufweist" synonym verwendet werden.

Der Begriff "geber" kann für den Begriff "sensor" synonym verwendet werden.

Der Begriff "Erkennen" kann für den Begriff "Ermitteln" synonym verwendet werden.

Die Positionsgröße kann initial bzw. anfänglich und/oder aktuell und/oder physikalisch sein.

Die Positionsgröße, die Position, die Richtungsgröße und/oder die Richtung können/kann einen Wert aufweisen.

Die Position kann absolut und/oder eine Drehposition sein.

Der Begriff "Winkelstellung" oder "Lage" kann für den Begriff "Position" synonym verwendet werden.

In dem Stillstand kann bei einer Drehzahl Null bedeuten.

Der Begriff "charakteristisch" kann für den Begriff "repräsentativ" synonym verwendet werden.

Der Begriff "Wählen" kann für den Begriff "Bestimmen" synonym verwendet werden.

Die Richtungsgröße kann physikalisch sein.

Die Richtungsgröße und/oder die Richtung können/kann, insbesondere zu einem Zeitpunkt und/oder entweder, ein Uhrzeigersinn oder ein Gegenuhrzeigersinn sein.

Kontinuierliches Drehen kann zeitlich dauerhaft und/oder ununterbrochen und/oder ohne einen Stillstand und/oder um mindestens 180 ° (Grad), insbesondere mindestens 360 °, und/oder zum Erreichen einer Soll-Drehzahl, insbesondere minimal 10 % (Prozent) einer Nenndrehzahl, des Rotors bedeuten.

Der Begriff "Rotieren" kann für den Begriff "Drehen" synonym verwendet werden.

Die Richtung kann eine Drehrichtung sein.

Der Begriff "basierend auf" kann für den Begriff "in Abhängigkeit von" synonym verwendet werden.

Erreichbar kann theoretisch erreichbar sein.

Der Begriff "Startmoment" oder "Anfahrmoment" kann für den Begriff "Drehmoment" synonym verwendet werden.

Der Begriff "leistbar" kann für den Begriff "erzeugbar" synonym verwendet werden.

Der Begriff "reis" kann für den Begriff "brech" synonym verwendet werden.

Der Begriff "schwelle" kann für dem Begriff "grenze" synonym verwendet werden.

Die Losbrechmomentgrenze kann in Abhängigkeit eines, insbesondere minimal, benötigten Losbrechmoments, insbesondere in einem bestimmungs- bzw. ordnungsgemäßen und/oder freigängigen bzw. lastfreien, insbesondere nichtblockiertem bzw. nichtverklemmten, Zustand des Bearbeitungsgeräts, und/oder, insbesondere werks- bzw. herstellerseitig und/oder fest, eingestellt bzw. vorgegeben sein, insbesondere gleich oder größer als das Losbrechmoment, und/oder durch einen Benutzer nicht vorgebbar sein.

Das erreichbare Drehmoment kann von der Position, die feststehen bzw. nicht bestimmbar sein kann, und der Richtung, die bestimmt werden kann, insbesondere wird, abhängig sein. Zusätzlich oder alternativ kann der Betrag des Drehmoments zu dem Drehen in, insbesondere mindestens, einer von zwei möglichen Richtungen immer erreichbar sein, da das Bearbeitungsgerät, insbesondere der Synchronmotor, derart ausgelegt bzw. ausgebildet sein kann.

Je nach Position kann das Drehen entweder in einer ersten Richtung, und insbesondere nicht in einer zweiten Richtung, oder in der zweiten Richtung, und insbesondere nicht in der ersten Richtung, oder in der ersten Richtung oder in der zweiten Richtung bestimmt werden, wobei die zweite Richtung der ersten Richtung entgegengesetzt sein kann.

In dem Schritt b) kann, aber braucht nicht der Betrag des Drehmoments bestimmt zu werden und/oder, ob der Betrag des Drehmoments zu dem Drehen in der Richtung größer als der Betrag der Losbrechmomentgrenze ist.

In dem Schritt c) kann der Synchronmotor derart angesteuert werden, wie dem Schritt b) zugrundeliegend.

Der Schritt b) kann zeitlich nach dem Schritt a) ausgeführt werden. Zusätzlich oder alternativ kann der Schritt c) zeitlich nach dem Schritt b) ausgeführt werden.

Das Ansteuern kann mittels Erzeugens von Ansteuerspannungen für die, insbesondere drei, Phasen des Synchronmotors sein und/oder ein Kommutieren aufweisen, insbesondere das Kommutieren sein.

Der Begriff "konfiguriert" oder "eingerichtet" kann für den Begriff "ausgebildet" synonym verwendet werden.

In einer Weiterbildung der Erfindung weist der Schritt b) auf: Bestimmen der Richtungsgröße zu dem Drehen in der ersten Richtung, und insbesondere nicht in der zweiten Richtung, falls die ermittelte Positionsgröße in, insbesondere mindestens, einem ersten Positionsgrößenbereich repräsentativ für einen ersten Positionsbereich von möglichen Positionen des Rotors ist. In dem ersten Positionsbereich ist der Betrag des Drehmoments zu dem Drehen in der ersten Richtung größer und in der zweiten Richtung gleich oder kleiner als der Betrag der Losbrechmomentgrenze. Die zweite Richtung ist der ersten Richtung entgegengesetzt. Dies ermöglicht, dass das Bestimmen einfach und/oder, insbesondere somit, schnell sein kann. Insbesondere kann der Begriff "Sektor" oder "Intervall", insbesondere "beschränktes Intervall", für den Begriff "Bereich" synonym verwendet werden. Zusätzlich oder alternativ kann in dem Schritt b) bestimmt werden, ob die Positionsgröße in dem ersten Positionsgrößenbereich ist oder nicht.

In einer Ausgestaltung der Erfindung weist der Schritt b) auf: Bestimmen der Richtungsgröße zu dem Drehen in der zweiten Richtung, und insbesondere nicht in der ersten Richtung, falls die ermittelte Positionsgröße in, insbesondere mindestens, einem zweiten Positionsgrößenbereich repräsentativ für einen zweiten Positionsbereich von möglichen Positionen des Rotors ist. Der zweite Positionsgrößenbereich ist von dem ersten Positionsgrößenbereich verschieden, insbesondere vollständig. In dem zweiten Positionsbereich ist der Betrag des Drehmoments zu dem Drehen in der zweiten Richtung größer und in der ersten Richtung gleich oder kleiner als der Betrag der Losbrechmomentgrenze.

Zusätzlich oder alternativ weist der Schritt b) auf: Bestimmen der Richtungsgröße zu dem Drehen, insbesondere entweder, in der ersten Richtung oder in der zweiten Richtung, falls die ermittelte Positionsgröße in, insbesondere mindestens, einem dritten Positionsgrößenbereich repräsentativ für einen dritten Positionsbereich von möglichen Positionen des Rotors ist. Der dritte Positionsgrößenbereich ist von dem ersten Positionsgrößenbereich, und insbesondere dem zweiten Positionsgrößenbereich, verschieden, insbesondere vollständig. In dem dritten Positionsbereich ist der Betrag des Drehmoments zu dem Drehen in der ersten Richtung und in der zweiten Richtung größer als der Betrag der Losbrechmomentgrenze.

Dies ermöglicht das einfache und/oder schnelle Bestimmen für jede mögliche Position.

Insbesondere kann in dem Schritt b) bestimmt werden, ob die Positionsgröße in dem zweiten Positionsgrößenbereich ist oder nicht, und/oder in dem dritten Positionsgrößenbereich ist oder nicht.

In einer Ausgestaltung der Erfindung erstrecken/erstreckt der erste Positionsbereich und/oder der zweite Positionsbereich und/oder der dritte Positionsbereich sich, insbesondere jeweils, über minimal 1 °, insbesondere minimal 2 °, insbesondere minimal 5 °, und/oder maximal 180 °, insbesondere maximal 120 °, insbesondere maximal 60 °. Zusätzlich oder alternativ ist der erste Positionsbereich einer von mehreren ersten Positionsbereichen und/oder der zweite Positionsbereich ist einer von mehreren zweiten Positionsbereichen und/oder der dritte Positionsbereich ist einer von mehreren dritten Positionsbereichen. Weiter zusätzlich oder alternativ ist der erste Positionsgrößenbereich einer von mehreren ersten Positionsgrößenbereichen und/oder der zweite Positionsgrößenbereich ist einer von mehreren zweiten Positionsgrößenbereichen und/oder der dritte Positionsgrößenbereich ist einer von mehreren dritten Positionsgrößenbereichen. Insbesondere können sich die ersten Positionsbereiche/Positionsgrößenbereiche, die zweiten Positionsbereiche/Positionsgrößenbereiche und/oder die dritten Positionsbereiche/Positionsgrößenbereiche abwechseln.

In einer Weiterbildung, insbesondere einer Ausgestaltung, der Erfindung weist der Schritt b) auf: Bestimmen der Richtungsgröße zu dem Drehen in der ersten Richtung oder in der zweiten Richtung, wobei die zweite Richtung der ersten Richtung entgegengesetzt ist, derart, dass bei mehrfachem bzw. wiederholtem Ausführen des Verfahrens das Drehen in der ersten Richtung und in der zweiten Richtung gleichverteilt ist, insbesondere falls die ermittelte Positionsgröße in dem dritten Positionsgrößenbereich ist. Dies ermöglicht einen gleichmäßigen Verschleiß des Bearbeitungsgeräts, insbesondere des Synchronmotors. Insbesondere kann eine Verteilung des Drehens in der ersten Richtung und in der zweiten Richtung derart gespeichert werden, dass das nächste Bestimmen in Abhängigkeit der gespeicherten Verteilung ausgeführt werden kann.

In einer Weiterbildung der Erfindung ist das Bearbeitungsgerät ohne eine Vorzugsrichtung des Rotors bzw. Vorzugsrichtung-frei, insbesondere betreibbar. Insbesondere kann der Begriff "Präferenz" für den Begriff "Vorzug" synonym verwendet werden.

In einer Weiterbildung der Erfindung ist das Bearbeitungsgerät ein Spezialernter, insbesondere ein Olivenschüttler, oder eine Heckenschere. Zusätzlich oder alternativ weist das Bearbeitungsgerät ein nicht-drehendes, insbesondere oszillierend translatorisches, Werkzeug auf, insbesondere mindestens einen Rechen. Dies ermöglicht, dass das Bearbeitungsgerät ohne eine Vorzugsrichtung des Rotors sein kann. Insbesondere kann das Werkzeug zu einem Bewegen in zwei, insbesondere entgegengesetzten, Bewegungsrichtungen ausgebildet sein. Mit anderen Worten: das Werkzeug kann zu einem Umkehren der Bewegungsrichtung bzw. einem Hin- und Her-Bewegen ausgebildet sein. Zusätzlich oder alternativ kann das Bewegen die Form einer offenen bzw. nicht-geschlossenen Kurve beschreiben. Weiter zusätzlich oder alternativ kann der Begriff "reziprok" oder "geradlinig" oder "schwingend" für den Begriff "translatorisch" synonym verwendet werden.

In einer Weiterbildung der Erfindung weist das Bearbeitungsgerät eine Umwandlungseinrichtung auf, insbesondere ein Getriebe. Die Umwandlungseinrichtung ist zum Umwandeln des Drehens des Rotors in ein Nicht-drehendes-Bewegen, insbesondere ein oszillierendes translatorisches Bewegen, ausgebildet. Dies ermöglicht, dass das Bearbeitungsgerät ohne eine Vorzugsrichtung des Rotors sein kann und/oder der Spezialernter oder die Heckenschere sein kann und/oder das nicht-drehende Werkzeug aufweisen kann. Zusätzlich oder alternativ ermöglicht das gleichverteilte Drehen einen gleichmäßigen Verschleiß der Umwandlungseinrichtung. Insbesondere kann das Getriebe mechanisch und/oder ein Koppelgetriebe sein, insbesondere ein Kurbeltrieb. Zusätzlich oder alternativ kann das Umwandeln automatisch sein.

In einer Weiterbildung der Erfindung ist der Schritt a), insbesondere das Verfahren bis zu dem Schritt c), ohne ein Drehen des Rotors. Zusätzlich oder alternativ ist der Schritt b) nach dem Schritt a) ohne einen Zwischenschritt und/oder unmittelbar. Weiter zusätzlich oder alternativ ist der Schritt c) nach dem Schritt b) ohne einen Zwischenschritt und/oder unmittelbar und/oder ohne einen Stillstand des Rotors. Dies ermöglicht ein gutes und/oder, insbesondere somit, benutzerfreundliches Verhalten des Bearbeitungsgeräts bei dem Starten bzw. Los- bzw. Andrehen des Synchronmotors. Insbesondere kann der Begriff "direkt" für den Begriff "unmittelbar" synonym verwendet werden.

In einer Weiterbildung der Erfindung weist das Ermitteln ein Messen mindestens einer Induktivität, insbesondere von Induktivitäten, des Synchronmotors, insbesondere des Stators, mittels Testsignale auf, insbesondere eine indirekte Flussermittlung durch Online Reaktanz Messung (INFORM), eine High-Frequency-Square-Wave-Injection, oder eine Injektion eines drehenden oder alternierenden Testsignals in einem Rotor- oder Stator-orientierten Koordinatensystem. Dies ermöglicht, dass das Ermitteln zuverlässig und/oder schnell sein kann. Insbesondere kann die Induktivität aktuell sein und/oder einen Wert aufweisen. Zusätzlich oder alternativ können die Testsignale hochfrequent und/oder Spannungs-Testsignale sein. Mit anderen Worten: die Testsignale können in ihrer Stärke und ihrer Dauer so kurz gewählt sein, dass es dadurch zu keinem Drehen des Rotors kommen kann. Beispielsweise können die Testsignale, insbesondere drei, rechteckförmige oder sinusförmige Testspannungen sein, insbesondere die an zugehörige Phasen des dreiphasigen Synchronmotors angelegt werden können. Weiter zusätzlich oder alternativ kann der Synchronmotor mindestens einen Spannungs- und/oder Stromsensor zu dem Messen aufweisen, insbesondere von Spannungen und/oder Strömen in den Phasen. Im Übrigen wird auf die Fachliteratur verwiesen.

In einer Weiterbildung der Erfindung ist die Positionsgröße die Position, insbesondere mittels Berechnens ermittelt. Zusätzlich oder alternativ ist die Richtungsgröße die Richtung, insbesondere bestimmt. Insbesondere kann der Positionsgrößenbereich der Positionsbereich sein.

In einer Weiterbildung der Erfindung ist der Betrag des Drehmoments erzeugbar von dem Synchronmotor bei seinem sensorlosen Ansteuern mit maximal einer maximal zulässigen Stromamplitude des Synchronmotors erreichbar. Dies ermöglicht eine Beschädigung des Synchronmotors zu vermeiden. Insbesondere kann die Stromamplitude einen Wert aufweisen. Zusätzlich oder alternativ kann der Begriff "Nennstrom" für den Begriff "maximal zulässige Stromamplitude" synonym verwendet werden.

Das erfindungsgemäße handgetragene Bearbeitungsgerät weist den permanenterregten Synchronmotor und eine Kontrolleinrichtung auf. Die Kontrolleinrichtung ist zum Ausführen eines, insbesondere des, Verfahrens wie vorhergehend beschrieben ausgebildet. Das Bearbeitungsgerät kann den/die gleichen Vorteil/e wie für das Verfahren vorhergehend beschrieben ermöglichen. Insbesondere kann das Bearbeitungsgerät wie vorhergehend für das Verfahren beschrieben ausgebildet sein. Zusätzlich oder alternativ kann die Kontrolleinrichtung elektrisch und/oder in Form einer Mikroprozessorsteuerung sein. Weiter zusätzlich oder alternativ kann das Ausführen automatisch sein.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgenden anhand der Figuren erläutert sind. Dabei zeigen:
- Fig. 1: ein Ablaufdiagramm eines erfindungsgemäßen Verfahrens zum Betreiben eines permanenterregten Synchronmotors eines handgetragenen Bearbeitungsgeräts,
- Fig. 2: schematisch einen Graphen eines erreichbaren Drehmoments erzeugbar von dem Synchronmotor bei seinem sensorlosen Ansteuern zu einem Drehen eines Rotors des Synchronmotors aus einem Stillstand in einer Richtung über möglichen Positionen des Rotors,
- Fig. 3: das erfindungsgemäße handgetragene Bearbeitungsgerät in Form eines Spezialernters bei dem Betreiben des Synchronmotors, und
- Fig. 4: das erfindungsgemäße handgetragene Bearbeitungsgerät in Form einer Heckenschere bei dem Betreiben des Synchronmotors.

### DETAILLIERTE BESCHREIBUNG DER AUSFÜHRUNGSBEISPIELE

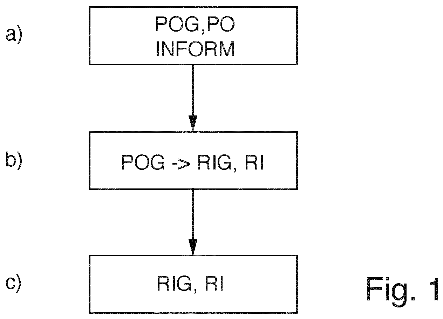

Fig. 1 bis 4 zeigen ein erfindungsgemäßes Verfahren zum Betreiben eines permanenterregten Synchronmotors 2 eines handgetragenen Bearbeitungsgeräts 1 und das erfindungsgemäße handgetragene Bearbeitungsgerät 1 aufweisend den permanenterregten Synchronmotor 2 und eine Kontrolleinrichtung 3. Die Kontrolleinrichtung 3 ist zum Ausführen des Verfahrens ausgebildet, insbesondere führt aus.

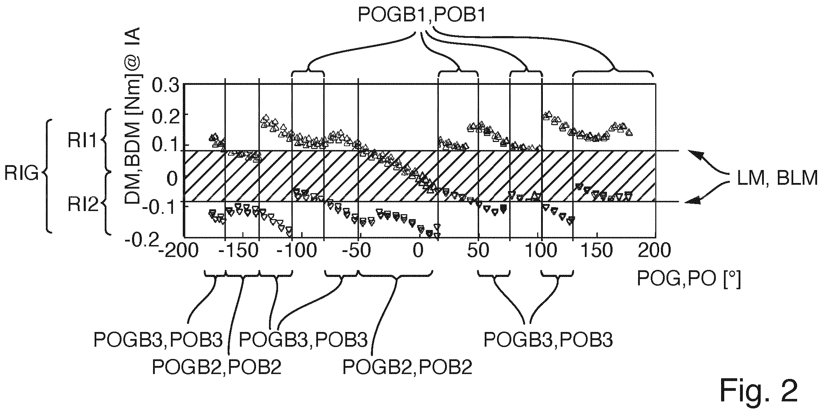

Das Verfahren weist die Schritte auf: a) sensorloses Ermitteln einer Positionsgröße POG repräsentativ für eine Position PO eines Rotors 4 des Synchronmotors 2 in einem Stillstand, mittels der Kontrolleinrichtung 3. b) Bestimmen einer Richtungsgröße RIG zu einem kontinuierlichen Drehen des Rotors 4 aus dem Stillstand in einer Richtung RI in Abhängigkeit der ermittelten Positionsgröße POG derart, dass ein Betrag BDM eines erreichbaren Drehmoments DM erzeugbar von dem Synchronmotor 2 bei seinem sensorlosen Ansteuern zu dem Drehen in der Richtung RI größer als ein Betrag BLM einer Losbrechmomentgrenze LM des Bearbeitungsgeräts 1 ist, wie in Fig. 2 gezeigt, mittels der Kontrolleinrichtung 3. c) sensorloses Ansteuern des Synchronmotors 2 in Abhängigkeit der bestimmten Richtungsgröße RIG zu dem Drehen in der Richtung RI, mittels der Kontrolleinrichtung 3.

Im Detail weist der Schritt b) auf: Bestimmen der Richtungsgröße RIG zu dem Drehen in einer ersten Richtung RI1, falls die ermittelte Positionsgröße POG in einem ersten Positionsgrößenbereich POGB1 repräsentativ für einen ersten Positionsbereich POB1 von möglichen Positionen des Rotors 4 ist. In dem ersten Positionsbereich POB1 ist der Betrag BDM des Drehmoments DM zu dem Drehen in der ersten Richtung RI1 größer und in einer zweiten Richtung RI2 gleich oder kleiner als der Betrag BLM der Losbrechmomentgrenze LM. Die zweite Richtung RI2 ist der ersten Richtung RI1 entgegengesetzt.

Des Weiteren weist der Schritt b) auf: Bestimmen der Richtungsgröße RIG zu dem Drehen in der zweiten Richtung RI2, falls die ermittelte Positionsgröße POG in einem zweiten Positionsgrößenbereich POGB2 repräsentativ für einen zweiten Positionsbereich POB2 von möglichen Positionen des Rotors 4 ist. Der zweite Positionsgrößenbereich POGB2 ist von dem ersten Positionsgrößenbereich POGB1 verschieden. In dem zweiten Positionsbereich POB2 ist der Betrag BDM des Drehmoments DM zu dem Drehen in der zweiten Richtung RI2 größer und in der ersten Richtung RI1 gleich oder kleiner als der Betrag BLM der Losbrechmomentgrenze LM.

Zusätzlich oder alternativ weist der Schritt b) auf: Bestimmen der Richtungsgröße RIG zu dem Drehen in der ersten Richtung RI1 oder in der zweiten Richtung RI2, falls die ermittelte Positionsgröße POG in einem dritten Positionsgrößenbereich POGB3 repräsentativ für einen dritten Positionsbereich POB3 von möglichen Positionen des Rotors 4 ist. Der dritte Positionsgrößenbereich POGB3 ist von dem ersten Positionsgrößenbereich POGB1, und insbesondere dem zweiten Positionsgrößenbereich POGB2, verschieden. In dem dritten Positionsbereich POB3 ist der Betrag BDM des Drehmoments DM zu dem Drehen in der ersten Richtung RI1 und in der zweiten Richtung RI2 größer als der Betrag BLM der Losbrechmomentgrenze LM.

Im Detail erstrecken/erstreckt der erste Positionsbereich POB1 und/oder der zweite Positionsbereich POB2 und/oder der dritte Positionsbereich POB3 sich über minimal 1 °, insbesondere minimal 2 °, insbesondere minimal 5 °, und/oder maximal 180 °, insbesondere maximal 120 °, insbesondere maximal 60 °.

Zusätzlich oder alternativ ist der erste Positionsbereich POB1 einer von mehreren ersten Positionsbereichen POB1, in dem gezeigten Ausführungsbeispiel vier, und/oder der zweite Positionsbereich POB2 ist einer von mehreren zweiten Positionsbereichen POB2, in dem gezeigten Ausführungsbeispiel zwei, und/oder der dritte Positionsbereich POB3 ist einer von mehreren dritten Positionsbereichen POB3, in dem gezeigten Ausführungsbeispiel fünf.

Weiter zusätzlich oder alternativ ist der erste Positionsgrößenbereich POGB1 einer von mehreren ersten Positionsgrößenbereichen POGB1, in dem gezeigten Ausführungsbeispiel die vier, und/oder der zweite Positionsgrößenbereich POGB2 ist einer von mehreren zweiten Positionsgrößenbereichen POGB2, in dem gezeigten Ausführungsbeispiel die zwei, und/oder der dritte Positionsgrößenbereich POGB3 ist einer von mehreren dritten Positionsgrößenbereichen POGB3, in dem gezeigten Ausführungsbeispiel die fünf.

In dem gezeigten Ausführungsbeispiel wechseln sich der dritte Positionsbereich POB3/Positionsgrößenbereich POGB3, der zweite Positionsbereich POB2/Positionsgrößenbereich POGB2, der dritte Positionsbereich POB3/Positionsgrößenbereich POGB3, der erste Positionsbereich POB1/Positionsgrößenbereich POGB1, der dritte Positionsbereich POB3/Positionsgrößenbereich POGB3, der zweite Positionsbereich POB2/Positionsgrößenbereich POGB2, der erste Positionsbereich POB1/Positionsgrößenbereich POGB1, der dritte Positionsbereich POB3/Positionsgrößenbereich POGB3, der erste Positionsbereich POB1/Positionsgrößenbereich POGB1, der dritte Positionsbereich POB3/Positionsgrößenbereich POGB3 und der erste Positionsbereich POB1/Positionsgrößenbereich POGB1 ab.

Außerdem weist der Schritt b) auf: Bestimmen der Richtungsgröße RIG zu dem Drehen in der ersten Richtung RI1 oder in der zweiten Richtung RI2, wobei die zweite Richtung RI2 der ersten Richtung RI1 entgegengesetzt ist, derart, dass bei mehrfachem Ausführen des Verfahrens das Drehen in der ersten Richtung RI1 und in der zweiten Richtung RI2 gleichverteilt ist, insbesondere falls die ermittelte Positionsgröße POG in dem dritten Positionsgrößenbereich POGB3 ist.

Weiter ist das Bearbeitungsgerät 1 ohne eine Vorzugsrichtung des Rotors 4 betreibbar.

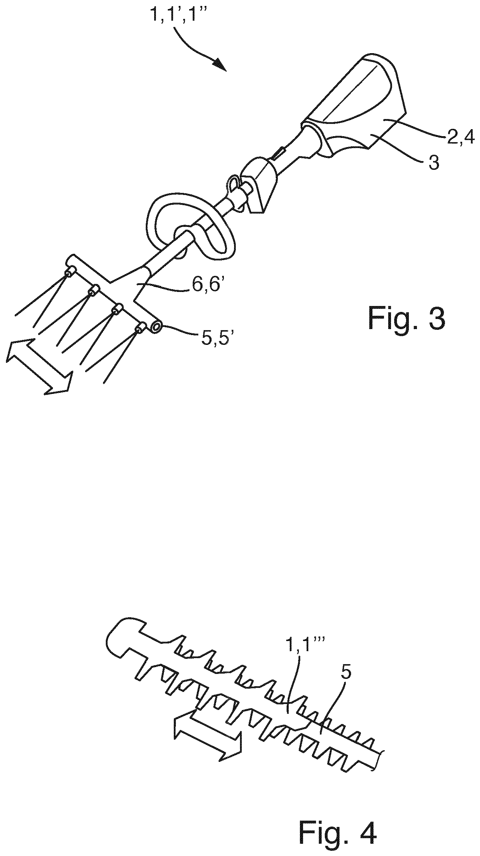

Zudem ist das Bearbeitungsgerät 1 ein Spezialernter 1', insbesondere ein Olivenschüttler 1", wie in Fig. 3 gezeigt, oder eine Heckenschere 1‴, wie in Fig. 4 gezeigt.

Zusätzlich oder alternativ weist das Bearbeitungsgerät 1 ein nicht-drehendes, insbesondere oszillierend translatorisches, Werkzeug 5 auf, insbesondere mindestens einen Rechen 5', wie in Fig. 3 gezeigt.

Des Weiteren weist das Bearbeitungsgerät 1 eine Umwandlungseinrichtung 6 auf, insbesondere ein Getriebe 6'. Die Umwandlungseinrichtung 6 ist zum Umwandeln des Drehens des Rotors 4 in ein Nicht-drehendes-Bewegen, insbesondere ein oszillierendes translatorisches Bewegen, insbesondere des Werkzeugs 5, ausgebildet, insbesondere wandelt um.

Außerdem ist der Schritt a), insbesondere das Verfahren bis zu dem Schritt c), ohne ein Drehen des Rotors 4. Zusätzlich oder alternativ ist der Schritt b) nach dem Schritt a) ohne einen Zwischenschritt und/oder unmittelbar. Weiter zusätzlich oder alternativ ist der Schritt c) nach dem Schritt b) ohne einen Zwischenschritt und/oder unmittelbar und/oder ohne einen Stillstand des Rotors 4.

Weiter weist das Ermitteln ein Messen mindestens einer Induktivität Synchronmotors 2 mittels Testsignale auf, insbesondere eine indirekte Flussermittlung durch Online Reaktanz Messung (INFORM), eine High-Frequency-Square-Wave-Injection, oder eine Injektion eines drehenden oder alternierenden Testsignals in einem Rotor- oder Stator-orientierten Koordinatensystem.

Zudem ist die Positionsgröße POG die Position PO, insbesondere mittels Berechnens ermittelt. Zusätzlich oder alternativ ist die Richtungsgröße RIG die Richtung RI, insbesondere bestimmt.

Des Weiteren ist der Betrag BDM des Drehmoments DM erzeugbar von dem Synchronmotor 2 bei seinem sensorlosen Ansteuern mit maximal einer maximal zulässigen Stromamplitude IA des Synchronmotors 2 erreichbar.

Wie die gezeigten und oben erläuterten Ausführungsbeispiele deutlich machen, stellt die Erfindung ein vorteilhaftes Verfahren zum Betreiben eines permanenterregten Synchronmotors eines handgetragenen Bearbeitungsgeräts und ein vorteilhaftes handgetragenes Bearbeitungsgerät bereit, das jeweils verbesserte Eigenschaften aufweist.

## Patentansprüche

1. Verfahren zum Betreiben eines permanenterregten Synchronmotors (2), wobei das Verfahren die Schritte aufweist:
a) Ermitteln einer Positionsgröße (POG) repräsentativ für eine Position (PO) eines Rotors (4) des Synchronmotors (2) in einem Stillstand,
b) Bestimmen einer Richtungsgröße (RIG) zu einem Drehen des Rotors (4) aus dem Stillstand in einer Richtung (RI) in Abhängigkeit der ermittelten Positionsgröße (POG) derart, dass ein Betrag (BDM) eines erreichbaren Drehmoments (DM) erzeugbar von dem Synchronmotor (2) bei seinem Ansteuern zu dem Drehen in der Richtung (RI) größer als ein Betrag (BLM) einer Losbrechmomentgrenze (LM) des Bearbeitungsgeräts (1) ist, und
c) Ansteuern des Synchronmotors (2) zu dem Drehen in der Richtung (RI),
- **dadurch gekennzeichnet, dass**
- der Synchronmotor (2) eines handgetragenen Bearbeitungsgeräts (1) ist,
- das Ermitteln sensorlos ist,
- das Drehen kontinuierlich ist, und
- das Ansteuern sensorlos und in Abhängigkeit der bestimmten Richtungsgröße (RIG) ist.

2. Verfahren nach dem vorhergehenden Anspruch,
- wobei der Schritt b) aufweist: Bestimmen der Richtungsgröße (RIG) zu dem Drehen in einer ersten Richtung (RI1), falls die ermittelte Positionsgröße (POG) in einem ersten Positionsgrößenbereich (POGB1) repräsentativ für einen ersten Positionsbereich (POB1) von möglichen Positionen des Rotors (4) ist, wobei in dem ersten Positionsbereich (POB1) der Betrag (BDM) des Drehmoments (DM) zu dem Drehen in der ersten Richtung (RI1) größer und in einer zweiten Richtung (RI2) gleich oder kleiner als der Betrag (BLM) der Losbrechmomentgrenze (LM) ist, wobei die zweite Richtung (RI2) der ersten Richtung (RI1) entgegengesetzt ist.

3. Verfahren nach dem vorhergehenden Anspruch,
- wobei der Schritt b) aufweist: Bestimmen der Richtungsgröße (RIG) zu dem Drehen in der zweiten Richtung (RI2), falls die ermittelte Positionsgröße (POG) in einem zweiten Positionsgrößenbereich (POGB2) repräsentativ für einen zweiten Positionsbereich (POB2) von möglichen Positionen des Rotors (4) ist, wobei der zweite Positionsgrößenbereich (POGB2) von dem ersten Positionsgrößenbereich (POGB1) verschieden ist, wobei in dem zweiten Positionsbereich (POB2) der Betrag (BDM) des Drehmoments (DM) zu dem Drehen in der zweiten Richtung (RI2) größer und in der ersten Richtung (RI1) gleich oder kleiner als der Betrag (BLM) der Losbrechmomentgrenze (LM) ist, und/oder
- wobei der Schritt b) aufweist: Bestimmen der Richtungsgröße (RIG) zu dem Drehen in der ersten Richtung (RI1) oder in der zweiten Richtung (RI2), falls die ermittelte Positionsgröße (POG) in einem dritten Positionsgrößenbereich (POGB3) repräsentativ für einen dritten Positionsbereich (POB3) von möglichen Positionen des Rotors (4) ist, wobei der dritte Positionsgrößenbereich (POGB3) von dem ersten Positionsgrößenbereich (POGB1), und insbesondere dem zweiten Positionsgrößenbereich (POGB2), verschieden ist, wobei in dem dritten Positionsbereich (POB3) der Betrag (BDM) des Drehmoments (DM) zu dem Drehen in der ersten Richtung (RI1) und in der zweiten Richtung (RI2) größer als der Betrag (BLM) der Losbrechmomentgrenze (LM) ist.

4. Verfahren nach einem der beiden vorhergehenden Ansprüche,
- wobei der erste Positionsbereich (POB1) und/oder der zweite Positionsbereich (POB2) und/oder der dritte Positionsbereich (POB3) sich über minimal 1 °, insbesondere minimal 2 °, insbesondere minimal 5 °, und/oder maximal 180 °, insbesondere maximal 120 °, insbesondere maximal 60 °, erstreckt/erstrecken, und/oder
- wobei der erste Positionsbereich (POB1) einer von mehreren ersten Positionsbereichen (POB1) ist und/oder der zweite Positionsbereich (POB2) einer von mehreren zweiten Positionsbereichen (POB2) ist und/oder der dritte Positionsbereich (POB3) einer von mehreren dritten Positionsbereichen (POB3) ist, und/oder
- wobei der erste Positionsgrößenbereich (POGB1) einer von mehreren ersten Positionsgrößenbereichen (POGB1) ist und/oder der zweite Positionsgrößenbereich (POGB2) einer von mehreren zweiten Positionsgrößenbereichen (POGB2) ist und/oder der dritte Positionsgrößenbereich (POGB3) einer von mehreren dritten Positionsgrößenbereichen (POGB3) ist.

5. Verfahren nach einem der, insbesondere drei, vorhergehenden Ansprüche,
- wobei der Schritt b) aufweist: Bestimmen der Richtungsgröße (RIG) zu dem Drehen in einer ersten Richtung (RI1) oder in einer zweiten Richtung (RI2), wobei die zweite Richtung (RI2) der ersten Richtung (RI1) entgegengesetzt ist, derart, dass bei mehrfachem Ausführen des Verfahrens das Drehen in der ersten Richtung (RI1) und in der zweiten Richtung (RI2) gleichverteilt ist, insbesondere falls die ermittelte Positionsgröße (POG) in dem dritten Positionsgrößenbereich (POGB3) ist.

6. Verfahren nach einem der vorhergehenden Ansprüche,
- wobei das Bearbeitungsgerät (1) ohne eine Vorzugsrichtung des Rotors (4) betreibbar ist.

7. Verfahren nach einem der vorhergehenden Ansprüche,
- wobei das Bearbeitungsgerät (1) ein Spezialernter (1'), insbesondere ein Olivenschüttler (1"), oder eine Heckenschere (1‴) ist, und/oder
- wobei das Bearbeitungsgerät (1) ein nicht-drehendes, insbesondere oszillierend translatorisches, Werkzeug (5), insbesondere mindestens einen Rechen (5'), aufweist.

8. Verfahren nach einem der vorhergehenden Ansprüche,
- wobei das Bearbeitungsgerät (1) eine Umwandlungseinrichtung (6), insbesondere ein Getriebe (6'), aufweist, wobei die Umwandlungseinrichtung (6) zum Umwandeln des Drehens des Rotors (4) in ein Nicht-drehendes-Bewegen, insbesondere ein oszillierendes translatorisches Bewegen, ausgebildet ist.

9. Verfahren nach einem der vorhergehenden Ansprüche,
- wobei der Schritt a), insbesondere das Verfahren bis zu dem Schritt c), ohne ein Drehen des Rotors (4) ist, und/oder
- wobei der Schritt b) nach dem Schritt a) ohne einen Zwischenschritt und/oder unmittelbar ist, und/oder
- wobei der Schritt c) nach dem Schritt b) ohne einen Zwischenschritt und/oder unmittelbar und/oder ohne einen Stillstand des Rotors (4) ist.

10. Verfahren nach einem der vorhergehenden Ansprüche,
- wobei das Ermitteln ein Messen mindestens einer Induktivität des Synchronmotors (2) mittels Testsignale aufweist, insbesondere eine indirekte Flussermittlung durch Online Reaktanz Messung (INFORM), eine High-Frequency-Square-Wave-Injection, oder eine Injektion eines drehenden oder alternierenden Testsignals in einem Rotor- oder Stator-orientierten Koordinatensystem.

11. Verfahren nach einem der vorhergehenden Ansprüche,
- wobei die Positionsgröße (POG) die Position (PO) ist, insbesondere mittels Berechnens ermittelt, und/oder
- wobei die Richtungsgröße (RIG) die Richtung (RI) ist, insbesondere bestimmt.

12. Verfahren nach einem der vorhergehenden Ansprüche,
- wobei der Betrag (BDM) des Drehmoments (DM) erzeugbar von dem Synchronmotor (2) bei seinem sensorlosen Ansteuern mit maximal einer maximal zulässigen Stromamplitude (IA) des Synchronmotors (2) erreichbar ist.

13. Handgetragenes Bearbeitungsgerät (1), wobei das Bearbeitungsgerät (1) aufweist:
- einen permanenterregten Synchronmotor (2), und
- eine Kontrolleinrichtung (3), wobei die Kontrolleinrichtung (3) zum Ausführen eines Verfahrens nach einem der vorhergehenden Ansprüche ausgebildet ist.

## Claims

1. Method for operating a permanently excited synchronous motor (2), wherein the method comprises the steps of:
a) determining a position variable (POG) representative of a position (PO) of a rotor (4) of the synchronous motor (2) at a standstill,
b) determining a direction variable (RIG) for a rotation of the rotor (4) from standstill in a direction (RI) on the basis of the determined position variable (POG) such that an absolute value (BDM) of an attainable torque (DM) that can be generated by the synchronous motor (2) during its actuation for the rotation in the direction (RI) is greater than an absolute value (BLM) of a breakaway torque limit (LM) of the working device (1), and
c) actuating the synchronous motor (2) for the rotation in the direction (RI),
- **characterized in that**
- the synchronous motor () is of a hand-held working device (1),
- the determination is sensorless,
- the rotation is continuous, and
- the actuation is sensorless and on the basis of the determined direction variable (RIG).

2. Method according to the preceding claim,
- wherein step b) involves: determining the direction variable (RIG) for the rotation in a first direction (RI1) if the determined position variable (POG) is in a first position variable range (POGB1) representative of a first position range (POB1) of possible positions of the rotor (4), wherein, in the first position range (POB1), the absolute value (BDM) of the torque (DM) for the rotation in the first direction (RI1) is greater than, and in a second direction (RI2) is equal to or less than, the absolute value (BLM) of the breakaway torque limit (LM), wherein the second direction (RI2) is opposite the first direction (RI1).

3. Method according to the preceding claim,
- wherein step b) involves: determining the direction variable (RIG) for the rotation in the second direction (RI2) if the determined position variable (POG) is in a second position variable range (POGB2) representative of a second position range (POB2) of possible positions of the rotor (4), wherein the second position variable range (POGB2) differs from the first position variable range (POGB1), wherein, in the second position range (POB2), the absolute value (BDM) of the torque (DM) for the rotation in the second direction (RI2) is greater than, and in the first direction (RI1) is equal to or less than, the absolute value (BLM) of the breakaway torque limit (LM), and/or
- wherein step b) involves: determining the direction variable (RIG) for the rotation in the first direction (RI1) or in the second direction (RI2) if the determined position variable (POG) is in a third position variable range (POGB3) representative of a third position range (POB3) of possible positions of the rotor (4), wherein the third position variable range (POGB3) differs from the first position variable range (POGB1) and in particular the second position variable range (POGB2), wherein, in the third position range (POB3), the absolute value (BDM) of the torque (DM) for the rotation in the first direction (RI1) and in the second direction (RI2) is greater than the absolute value (BLM) of the breakaway torque limit (LM).

4. Method according to one of the two preceding claims,
- wherein the first position range (POB1) and/or the second position range (POB2) and/or the third position range (POB3) extend(s) over a minimum of 1°, in particular a minimum of 2°, in particular a minimum of 5°, and/or a maximum of 180°, in particular a maximum of 120°, in particular a maximum of 60°, and/or
- wherein the first position range (POB1) is one of a plurality of first position ranges (POB1) and/or the second position range (POB2) is one of a plurality of second position ranges (POB2) and/or the third position range (POB3) is one of a plurality of third position ranges (POB3), and/or
- wherein the first position variable range (POGB1) is one of a plurality of first position variable ranges (POGB1) and/or the second position variable range (POGB2) is one of a plurality of second position variable ranges (POGB2) and/or the third position variable range (POGB3) is one of a plurality of third position variable ranges (POGB3).

5. Method according to one of the, in particular three, preceding claims,
- wherein step b) involves: determining the direction variable (RIG) for the rotation in a first direction (RI1) or in a second direction (RI2), wherein the second direction (RI2) is opposite the first direction (RI1), such that, when the method is carried out multiple times, the rotation is equally distributed in the first direction (RI1) and in the second direction (RI2), in particular if the determined position variable (POG) is in the third position variable range (POGB3).

6. Method according to one of the preceding claims,
- wherein the working device (1) can be operated without a preferred direction of the rotor (4).

7. Method according to one of the preceding claims,
- wherein the working device (1) is a special harvester (1'), in particular an olive shaker (1"), or a hedge trimmer (1‴), and/or
- wherein the working device (1) has a non-rotating, in particular oscillating translational, tool (5), in particular at least one rake (5').

8. Method according to one of the preceding claims,
- wherein the working device (1) has a conversion device (6), in particular a gearbox (6'), wherein the conversion device (6) is designed to convert the rotation of the rotor (4) into a non-rotating movement, in particular an oscillating translational movement.

9. Method according to one of the preceding claims,
- wherein step a), in particular the method up to step c), is without a rotation of the rotor (4), and/or
- wherein step b) is after step a) without an intermediate step and/or immediately, and/or
- wherein step c) is after step b) without an intermediate step and/or immediately and/or without a standstill of the rotor (4).

10. Method according to one of the preceding claims,
- wherein the determination involves measuring at least one inductance of the synchronous motor (2) by means of test signals, in particular an indirect flux determination by online reactance measurement (INFORM), a high-frequency square-wave injection, or an injection of a rotating or alternating test signal in a rotor-oriented or stator-oriented coordinate system.

11. Method according to one of the preceding claims,
- wherein the position variable (POG) is the position (PO), in particular determined by means of calculation, and/or
- wherein the direction variable (RIG) is the direction (RI), in particular determined.

12. Method according to one of the preceding claims,
- wherein the absolute value (BDM) of the torque (DM) that can be generated by the synchronous motor (2) can be achieved when the latter is sensorlessly actuated with at most a maximum permissible current amplitude (IA) of the synchronous motor (2).

13. Hand-held working device (1), wherein the working device (1) has:
- a permanently excited synchronous motor (2), and
- a control device (3), wherein the control device (3) is designed to carry out a method according to one of the preceding claims.

## Revendications

1. Procédé pour faire fonctionner un moteur synchrone à excitation permanente (2), le procédé comprenant les étapes suivantes :
a) la détermination d'une grandeur de position (POG) représentative d'une position (PO) d'un rotor (4) du moteur synchrone (2) dans un état d'arrêt,
b) la détermination d'une grandeur de direction (RIG) pour une rotation du rotor (4) à partir de l'état d'arrêt dans une direction (RI) en fonction de la grandeur de position déterminée (POG), de telle sorte qu'un montant (BDM) d'un couple atteignable (DM), pouvant être généré par le moteur synchrone (2) lors de sa commande pour la rotation dans la direction (RI), soit supérieur à un montant (BLM) d'une limite de couple de décrochage (LM) de l'outil d'usinage (1), et
c) la commande du moteur synchrone (2) pour la rotation dans la direction (RI),
- **caractérisé en ce que**
- le moteur synchrone (2) est celui d'un appareil d'usinage portatif (1),
- la détermination est sans capteur,
- la rotation est continue, et
- la commande est sans capteur et dépend de la grandeur de direction déterminée (RIG).

2. Procédé selon la revendication précédente,
- dans lequel l'étape b) comprend : la détermination de la grandeur de direction (RIG) pour la rotation dans une première direction (RI1), si la grandeur de position déterminée (POG) se situe dans une première plage de grandeurs de position (POGB1) représentative d'une première plage de positions (POB1) de positions possibles du rotor (4), dans la première plage de positions (POB1), le montant (BDM) du couple (DM) pour la rotation dans la première direction (RI1) étant supérieur, et dans une deuxième direction (RI2) étant égal ou inférieur au montant (BLM) de la limite de couple de décrochage (LM), la deuxième direction (RI2) étant opposée à la première direction (RI1).

3. Procédé selon la revendication précédente,
- dans lequel l'étape b) comprend : la détermination de la grandeur de direction (RIG) pour la rotation dans la deuxième direction (RI2), si la grandeur de position déterminée (POG) se situe dans une deuxième plage de grandeurs de position (POGB2) représentative d'une deuxième plage de positions (POB2) de positions possibles du rotor (4), la deuxième plage de grandeurs de position (POGB2) étant différente de la première plage de grandeurs de position (POGB1), dans la deuxième plage de positions (POB2), le montant (BDM) du couple (DM) pour la rotation dans la deuxième direction (RI2) étant supérieur, et dans la première direction (RI1) étant égal ou inférieur au montant (BLM) de la limite de couple de décrochage (LM), et/ou
- dans lequel l'étape b) comprend : la détermination de la grandeur de direction (RIG) pour la rotation dans la première direction (RI1) ou dans la deuxième direction (RI2), si la grandeur de position déterminée (POG) se situe dans une troisième plage de grandeurs de position (POGB3) représentative d'une troisième plage de positions (POB3) de positions possibles du rotor (4), la troisième plage de grandeurs de position (POGB3) étant différente de la première plage de grandeurs de position (POGB1), et notamment de la deuxième plage de grandeurs de position (POGB2), dans la troisième plage de positions (POB3), le montant (BDM) du couple (DM) pour la rotation dans la première direction (RI1) et dans la deuxième direction (RI2) étant supérieur au montant (BLM) de la limite de couple de décrochage (LM).

4. Procédé selon l'une quelconque des deux revendications précédentes,
- dans lequel la première plage de positions (POB1) et/ou la deuxième plage de positions (POB2) et/ou la troisième plage de positions (POB3) s'étend/s'étendent sur au minimum 1°, notamment au minimum 2°, notamment au moins 5°, et/ou sur au maximum 180°, notamment au maximum 120°, notamment au maximum 60°, et/ou
- dans lequel la première plage de positions (POB1) est l'une de plusieurs premières plages de positions (POB1) et/ou la deuxième plage de positions (POB2) est l'une de plusieurs deuxièmes plages de positions (POB2) et/ou la troisième plage de positions (POB3) est l'une de plusieurs troisièmes plages de positions (POB3), et/ou
- dans lequel la première plage de grandeurs de position (POGB1) est l'une de plusieurs premières plages de grandeurs de position (POGB1) et/ou la deuxième plage de grandeurs de position (POGB2) est l'une de plusieurs deuxièmes plages de grandeurs de position (POGB2) et/ou la troisième plage de grandeurs de position (POGB3) est l'une de plusieurs troisièmes plages de grandeurs de position (POGB3).

5. Procédé selon l'une des, notamment trois, revendications précédentes,
- dans lequel l'étape b) comprend : la détermination de la grandeur de direction (RIG) pour la rotation dans une première direction (RI1) ou dans une deuxième direction (RI2), la deuxième direction (RI2) étant opposée à la première direction (RI1), de telle sorte que, lors d'une exécution multiple du procédé, la rotation dans la première direction (RI1) et dans la deuxième direction (RI2) soit répartie de manière uniforme, notamment lorsque la grandeur de position déterminée (POG) se situe dans la troisième plage de grandeurs de position (POGB3).

6. Procédé selon l'une quelconque des revendications précédentes,
- dans lequel l'appareil de travail (1) peut fonctionner sans direction préférentielle du rotor (4).

7. Procédé selon l'une quelconque des revendications précédentes,
- dans lequel l'appareil de travail (1) est un récolteur spécial (1'), notamment un vibreur d'olives (1"), ou un taille-haies (1‴), et/ou
- dans lequel l'appareil de travail (1) comporte un outil (5) non rotatif, notamment oscillant de translation, notamment au moins un râteau (5').

8. Procédé selon l'une quelconque des revendications précédentes,
- dans lequel l'appareil de travail (1) comporte un dispositif de transformation (6), notamment une transmission (6'), le dispositif de transformation (6) étant conçu pour transformer la rotation du rotor (4) en un mouvement non rotatif, notamment un mouvement oscillant de translation.

9. Procédé selon l'une quelconque des revendications précédentes,
- dans lequel l'étape a), notamment le procédé jusqu'à l'étape c), s'effectue sans une rotation du rotor (4), et/ou
- dans lequel l'étape b) s'effectue après l'étape a) sans étape intermédiaire et/ou de manière immédiate, et/ou
- dans lequel l'étape c) s'effectue après l'étape b) sans étape intermédiaire et/ou de manière immédiate et/ou sans un arrêt du rotor (4).

10. Procédé selon l'une quelconque des revendications précédentes,
- dans lequel la détermination comporte une mesure d'au moins une inductance du moteur synchrone (2) au moyen de signaux de test, notamment une détermination indirecte du flux par mesure de réactance en ligne (INFORM), une injection de signal carré haute fréquence, ou une injection d'un signal de test rotatif ou alternatif dans un système de coordonnées orienté rotor ou stator.

11. Procédé selon l'une quelconque des revendications précédentes,
- dans lequel la grandeur de position (POG) est la position (PO), notamment déterminée par calcul, et/ou
- dans lequel la grandeur de direction (RIG) est la direction (RI), notamment déterminée.

12. Procédé selon l'une quelconque des revendications précédentes,
- dans lequel la valeur absolue (BDM) du couple (DM) pouvant être généré par le moteur synchrone (2) lors de sa commande sans capteur est atteignable avec au maximum une amplitude de courant maximale admissible (IA) du moteur synchrone (2).

13. Appareil de travail portatif (1), l'appareil de travail (1) présentant :
- un moteur synchrone à excitation permanente (2), et
- un dispositif de commande (3), le dispositif de commande (3) étant conçu pour exécuter un procédé selon l'une quelconque des revendications précédentes.
